# EUROPÄISCHE PATENTSCHRIFT

(11) **EP 0 758 066 B1**
(45) Veröffentlichungstag und Bekanntmachung des Hinweises auf die Patenterteilung: **20.10.1999**
(21) Anmeldenummer: 96109826.6
(22) Anmeldetag: 19.06.1996
(51) Int. Cl.: F16L 17/025, F16L 21/03, F16L 21/035, F16L 37/08

(54) **Steckkupplung für Druckmittelsysteme**
Quick coupling for pressurized system
Raccord rapide pour système sous pression

(30) Priorität: 08.08.1995 DE 19529082
(43) Veröffentlichungstag der Anmeldung: 12.02.1997
(73) Patentinhaber: Armaturenfabrik Hermann Voss GmbH + Co., 51688 Wipperfürth (DE)
(72) Erfinder: Hefele, Reinhard, Dr. Ing., 51515 Kürten (DE)
(74) Vertreter: Patentanwälte Dr. Solf & Zapf

(56) Entgegenhaltungen:
- EP-A- 0 005 865
- EP-A- 0 226 689
- EP-A- 0 381 357
- DE-A- 3 235 125
- DE-A- 4 002 057
- US-A- 4 546 987

## Beschreibung

Die vorliegende Erfindung betrifft eine Steckkupplung für Druckmittelsysteme, bestehend aus zwei Kupplungsteilen, und zwar einem Gehäuseteil und einem Steckerteil, wobei das Steckerteil mit einem Steckerschaft über mindestens eine Hauptdichtung druckdicht abgedichtet in eine Aufnahmeöffnung des Gehäuseteils einsteckbar und über eine Verriegelungseinrichtung gegen Lösen arretierbar ist, und wobei eine Schmutzdichtung gegen Eindringen von Schmutz und dergleichen in den Bereich der Hauptdichtung und/oder der Verriegelungseinrichtung sowie ein Federelement zum Erzeugen einer in Löserichtung des Steckerteils wirkenden Vorspannkraft vorgesehen sind, wobei die Hauptdichtung, die Schmutzdichtung und das Federelement zu einem einstückigen, elastischen Profilelement integriert sind.

Eine derartige Steckkupplung ist aus der DE-A-32 35 125 bekannt. Das als Haupt- und Schmutzdichtung sowie als Federelement fungierende Profilelement ist als gummielastischer Profilring, und zwar speziell als sogenannter Quad-Ring mit etwa quadratischem Ringquerschnitt, ausgebildet und zwischen einem Ringbund des Steckerteils und einer Ausnehmung des Gehäuseteils angeordnet.

Eine weitere Steckkupplung ist beispielsweise aus der Veröffentlichung EP-B-0 005 865 bekannt. Dabei sind bezüglich der Dichtungselemente und des die axiale Vorspannung des Steckerteils erzeugenden Federelementes verschiedene Ausführungsformen beschrieben, wobei das Federelement von einer Tellerfeder oder einem Gummipuffer gebildet sein kann. Im Falle der Verwendung eines Gummipuffers kann dieser gleichzeitig auch eine Dichtungsfunktion erfüllen, allerdings sind bei allen bekannten Ausführungen stets zumindest zwei einzelne Dichtungs-/Federelemente vorgesehen.

Die EP-A-0 226 689 beschreibt eine Steckkupplung mit einer Verriegelungseinrichtung, die aus einem elastischen Haltering des einen Kupplungsteils und zwei Ringnuten des anderen Kupplungsteils besteht. Dadurch sind eine teilgesteckte Vorraststellung und eine ganz gesteckte Vollraststellung gewährleistet. In der Vollraststellung ist eine druckdichte Abdichtung gewährleistet, während in der Vorraststellung eine derart unvollständige Abdichtung vorliegt, daß im Falle einer Druckbeaufschlagung ein akustisch wahrnehmbares Leckage-Geräusch erzeugt wird. Dabei ist zusätzlich zu einer inneren Hauptdichtung auch ein separater Dichtring als Schmutzdichtung vorgesehen, wobei aber in der Vorraststellung dieser Dichtring unwirksam ist und deshalb keine Abdichtung gegen Eindringen von Schmutz und dergleichen gewährleistet ist.

Der vorliegenden Erfindung liegt die Aufgabe zugrunde, ausgehend von dem beschriebenen Stand der Technik eine Steckkupplung zu schaffen, die die Vorteile der bekannten Kupplungen nach DE-A-32 35 125 und nach EP-A-0 226 689 in sich vereint, dabei aber stets, also in allen Montagestellungen, eine effektive Abdichtung gegen Eindringen von Schmutz und dergleichen gewährleistet.

Erfindungsgemäß wird dies bei einer Steckkupplung nach dem Oberbegriff des Anspruchs 1 durch die kennzeichnenden Merkmale des Anspruchs 1 erreicht. Demnach sind zunächst - in an sich bekannter Weise - die Hauptdichtung, die Schmutzdichtung und das Federelement zu einem einstückigen, elastischen Profilelement integriert. Dieses Profilelement bildet ein "Multifunktionselement", welches besonders einfach und wirtschaftlich hergestellt und montiert werden kann. Es besteht zweckmäßigerweise aus einem die Hauptdichtung bildenden ersten Ringabschnitt, einem die Schmutzdichtung bildenden zweiten Ringabschnitt und einem die beiden Ringabschnitte miteinander verbindenden Verbindungsabschnitt. Der die Schmutzdichtung bildende zweite Ringabschnitt ist dabei vorzugsweise lamellenartig ringscheibenförmig ausgebildet und auf der in Löserichtung des Steckerteils weisenden Seite angeordnet. Der Verbindungsabschnitt ist bevorzugt ebenfalls ringförmig, allerdings insbesondere mit reduziertem Querschnitt bzw. Durchmesser ausgebildet. Die Funktion des Federelementes ist erfindungsgemäß durch axiale "Einspannung" des Profilelementes und daraus resultierender elastischer Verformung gewährleistet, und zwar durch den die Schmutzdichtung bildenden Ringabschnitt oder aber durch kombinierte Wirkung beider Ringabschnitte. Weiterhin sind bei der erfindungsgemäßen Steckkupplung - wiederum in an sich bekannter Weise - eine Vorraststellung und eine Vollraststellung vorgesehen, wobei die Vorraststellung dazu dient, ein unkorrektes Stecken akustisch anzuzeigen. Erfindungsgemäß ist hierbei durch die besondere Ausgestaltung der Schmutzdichtung bereits in der Vorraststellung eine effektive Schmutzabdichtung gewährleistet, und bei Druckbeaufschlagung wird die Schmutzdichtung rückschlagventilartig geöffnet, um so die das Leckage-Geräusch erzeugende Druckmittelströmung zu ermöglichen.

Weitere vorteilhafte Ausgestaltungsmerkmale der Erfindung sind in den Unteransprüchen sowie der folgenden Beschreibung enthalten.

Anhand eines in der Zeichnung veranschaulichten Ausführungsbeispiels soll die Erfindung nun näher erläutert werden. Dabei zeigen:
- Fig. 1: einen Teilbereich einer erfindungsgemäßen Steckkupplung im Halb-Axialschnitt in einer noch nicht ganz eingesteckten Stellung des Steckerteils (sog. Vorraststellung) und
- Fig. 2: eine Darstellung analog zu Fig. 1 in der ganz eingesteckten Stellung (sog. Vollraststellung).

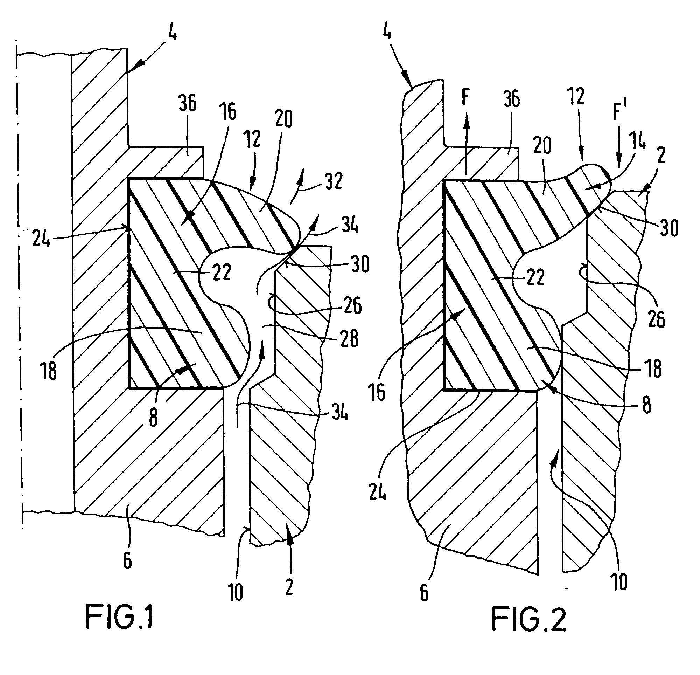

Wie in Fig. 1 und 2 angedeutet ist, besteht eine Steckkupplung aus einem Gehäuseteil 2 und einem Steckerteil 4. Das Steckerteil 4 ist mit einem Steckerschaft 6 über mindestens eine Hauptdichtung 8 druckdicht abgedichtet in eine Aufnahmeöffnung 10 des Gehäuseteils 2 einsteckbar und dabei über eine nicht dargestellte Verriegelungseinrichtung gegen Lösen arretierbar. Zum Schutz gegen Eindringen von Schmutz und dergleichen (Feuchtigkeit, Staub usw.) in den Bereich der Hauptdichtung 8 und/oder in den Bereich der Verriegelungseinrichtung ist eine Schmutzdichtung 12 vorgesehen. Ferner weist die Steckkupplung zum Erzeugen einer in Löserichtung des Steckerteils 4 wirkenden Vorspannkraft F ein Federelement 14 auf.

Hierbei sind die Hauptdichtung 8, die Schmutzdichtung 12 und das Federelement 14 zu einem einstückigen, aus einem gummiealastischen Material bestehenden Formteil bzw. Profilelement 16 integriert, welches somit ein "Multifunktionselement" bildet. Das erfindungsgemäße Profilelement 16 ist derart an bzw. in einem der beiden Kupplungsteile 2,4 gelagert, daß es in der eingesteckten Lage des Steckerteils 4 etwa im Mündungsöffnungsbereich der Aufnahmeöffnung 10 angeordnet ist. Dabei besteht das Profilelement 16 aus einem die Hauptdichtung 8 bildenden ersten Ringabschnitt 18, einem die Schmutzdichtung 12 bildenden zweiten Ringabschnitt 20 sowie einem - insbesondere mit reduziertem Querschnitt ebenfalls ringförmigen - Verbindungsabschnitt 22. Der erste, in Einsteckrichtung weisende Ringabschnitt 18 ist mit entsprechendem Ringquerschnitt derart wulstartig ausgebildet, daß im eingesteckten Zustand des Steckerteils 4 eine druckdichte Abdichtung gewährleistet ist. Der die Schmutzdichtung 12 bildende zweite Ringabschnitt 20 ist bevorzugt lamellenartig ringscheibenförmig ausgebildet und auf der in Löserichtung weisenden Seite angeordnet.

Das Profilelement 16 ist in der eingesteckten und verriegelten Stellung des Steckerteils 4 derart zwischen dem Gehäuseteil 2 und dem Steckerteil 4 in axialer Richtung mit elastischer Vorspannung eingespannt angeordnet, daß die Funktion des Federelementes 14 durch die elastische Verformung des Profilelementes 16 gewährleistet ist. Im dargestellten Ausführungsbeispiel übernimmt hauptsächlich die Schmutzdichtung 12 die Funktion des Federelementes 14.

Das erfindungsgemäße Profilelement 16 ist speziell für eine Steckkupplung vorgesehen, bei der die Verriegelungseinrichtung derart ausgebildet ist, daß einerseits eine teilgesteckte Vorraststellung (Fig. 1) und andererseits eine ganz gesteckte Vollraststellung (Fig. 2) gewährleistet sind. In der Vorraststellung liegt eine derart unvollständige Abdichtung vor, daß im Falle einer Druckbeaufschlagung mit einem Druckmedium letzteres dosiert an der Hauptdichtung 8 und der Schmutzdichtung 12 vorbei entweicht und dabei ein akustisch wahrnehmbares Leckgeräusch erzeugt wird. In der Vollraststellung ist dann durch die Hauptdichtung 8 die vollständige druckdichte Abdichtung gewährleistet und durch die Schmutzdichtung 12 die zusätzliche Abdichtung gegen Eindringen von Schmutz und dergleichen. Erfindungsgemäß ist hierbei durch die Schmutzdichtung 12 auch schon in der Vorraststellung eine Abdichtung gegen Eindringen von Schmutz und dergleichen gewährleistet, wobei dann im Falle der Druckbeaufschlagung die Schmutzdichtung 12 durch das Druckmedium rückschlagventilartig geöffnet wird.

Hierzu ist im dargestellten Ausführungsbeispiel das Profilelement 16 am Steckerteil 4, insbesondere in einer Außenringnut 24 des Steckerschaftes 6, gelagert, und zwar derart, daß die Hauptdichtung 8 in der Vollraststellung (Fig. 2) in dichtender Anlage in der Aufnahmeöffnung 10 des Gehäuseteils 2 und in der Vorraststellung (Fig. 1) im Bereich einer Erweiterung 26 der Aufnahmeöffnung 10 angeordnet ist, so daß in der Vorraststellung ein Ringspalt 28 als "Leckagepfad" gebildet ist. Die Schmutzdichtung 12 liegt vorzugsweise bereits in der Vorraststellung zur Schmutzabdichtung am Mündungsrand der Aufnahmeöffnung 10 bzw. von deren Erweiterung 26 an, vorzugsweise im Bereich einer dort gebildeten Anfasung 30, kann aber bei Druckbeaufschlagung der Steckkupplung vom Druckmedium in Pfeilrichtung 32 in Fig. 1 lamellenartig so abgehoben werden, daß das Druckmedium über den Ringspalt 28 an der Hauptdichtung 8 und dann auch an der abgehobenen Schmutzdichtung 12 vorbei unter Erzeugung eines akustischen Geräusches (Pfeif- oder Zischton) entweichen kann; s. die in Fig. 1 eingezeichneten Pfeile 34. Dabei kann der die Schmutzdichtung 12 bildende zweite Ringabschnitt 20 so geformt sein, daß er maßgeblich an der Geräuschentwicklung durch Schwingung teilnimmt. In der Vollraststellung (Fig. 2) wird die Schmutzdichtung 12 bzw. der zweite Ringabschnitt 20 dann durch axiale Einspannung zwischen dem Gehäuseteil 2 (im Bereich der bevorzugt vorgesehenen Anfasung 30) und dem Steckerteil 4 (bzw. bevorzugt einem die Außenringnut 24 begrenzenden Ringstegansatz 36) derart weitergehend elastisch verformt, daß hierdurch die Schmutzdichtung 12 die Vorspannkraft F erzeugt, indem sie sich am Gehäuseteil 2 mit einer entgegengesetzten Kraft F' abstützt (s. Fig. 2).

Alternativ zu dem dargestellten Ausführungsbeispiel kann auch vorgesehen sein, daß das Profilelement 16 im Gehäuseteil 2, insbesondere in einer Innenringnut der Aufnahmeöffnung, gelagert ist. Dabei ist das Profilelement 16 entsprechend derart "umgekehrt" zu konzipieren, daß auch dabei die beschriebene Mehrfachfunktion gewährleistet ist, wobei auch Anpassungen im Bereich des Steckerteils notwendig sind, um insbesondere die "akustische Leckage" in der bevorzugt vorgesehenen Vorraststellung zu gewährleisten. Da dies aber im Bereich fachmännischen Könnens liegt, kann auf weitergehende Erläuterungen hierzu verzichtet werden.

Bei einer ebenfalls möglichen Ausführungsvariante kann die Funktion des Federelementes 14 auch von dem die Hauptdichtung 8 bildenden ersten Ringabschnitt 18 des Profilelementes 16 übernommen werden, wozu sich dann dieser erste Ringabschnitt 18 im eingesteckten und (voll) verriegelten Zustand des Steckerteils 4 mit Vorspannung in axialer Richtung an einer Stufenfläche des Gehäuseteils 2 (bei der dargestellten Lagerung des Profilelementes 16 am Steckerteil 4) oder des Steckerteils 4 (bei der alternativ möglichen, nicht dargestellten Lagerung des Profilelementes im Gehäuseteil) abstützt. Ferner ist auch eine Ausführungsform möglich, bei der die Hauptdichtung und die Schmutzdichtung in Kombination miteinander und gegebenenfalls mit dem Verbindungsabschnitt 22 als Federelement die axiale Vorspannung erzeugen.

Es sei noch erwähnt, daß die genaue Ausgestaltung der Verriegelungseinrichtung nicht Gegenstand der vorliegenden Anmeldung ist und daher auch nicht näher erläutert wird, zumal es hierfür zahlreiche Möglichkeiten gibt. Es sei hierzu auf die älteren Anmeldungen DE-A-195 22 052 , DE-A-195 23 830 , DE-A-195 23 831 und DE-A-195 23 833 der Anmelderin verwiesen.

## Patentansprüche

1. Steckkupplung für Druckmittelsysteme, bestehend aus zwei Kupplungsteilen, und zwar einem Gehäuseteil (2) und einem Steckerteil (4), wobei das Steckerteil (4) mit einem Steckerschaft (6) über mindestens eine Hauptdichtung (8) druckdicht abgedichtet in eine Aufnahmeöffnung (10) des Gehäuseteils (2) einsteckbar und über eine Verriegelungseinrichtung gegen Lösen arretierbar ist, und wobei eine Schmutzdichtung (12) gegen Eindringen von Schmutz und dergleichen in den Bereich der Hauptdichtung (8) und/oder der Verriegelungseinrichtung sowie ein Federelement (14) zum Erzeugen einer in Löserichtung des Steckerteils (4) wirkenden Vorspannkraft (F) vorgesehen sind, wobei die Hauptdichtung (8), die Schmutzdichtung (12) und das Federelement (14) zu einem einstückigen, elastischen Profilelement (16) integriert sind,
**dadurch gekennzeichnet,** daß die Verriegelungseinrichtung derart ausgebildet ist, daß eine teilgesteckte Vorraststellung und eine ganz gesteckte Vollraststellung gewährleistet sind, wobei in der Vorraststellung eine derart unvollständige Abdichtung vorliegt,daß im Falle einer Druckbeaufschlagung mit einem Druckmedium dieses dosiert an der Hauptdichtung (8) und der Schmutzdichtung (12) vorbei entweicht und dabei ein akustisch wahrnehmbares Leckgeräusch erzeugt wird, und wobei in der Vollraststellung durch die Hauptdichtung (8) die vollständige druckdichte Abdichtung gewährleistet ist, wobei durch die Schmutzdichtung (12) bereits in der Vorraststellung eine Abdichtung gegen Eindringen von Schmutz und dergleichen gewährleistet ist und im Falle der Druckbeaufschlagung die Schmutzdichtung (12) durch das Druckmedium rückschlagventilartig geöffnet wird.

2. Steckkupplung nach Anspruch 1,
**dadurch gekennzeichnet,** daß das Profilelement (16) aus einem die Hauptdichtung (8) bildenden ersten Ringabschnitt (18),einem die Schmutzdichtung (12) bildenden, vorzugsweise lamellenartigen zweiten Ringabschnitt (10) und einem - insbesondere mit reduziertem Querschnitt ebenfalls ringförmigen - Verbindungsabschnitt (22) besteht.

3. Steckkupplung nach Anspruch 1 oder 2,
**dadurch gekennzeichnet,** daß das Profilelement (16) in der eingesteckten und verriegelten Stellung des Steckerteils (4) derart zwischen dem Gehäuseteil (2) und dem Steckerteil (4) mit elastischer Vorspannung angeordnet ist, daß die Schmutzdichtung (12) und/oder die Hauptdichtung (8), ggf. in Kombination mit dem Verbindungsabschnitt (22), die Funktion des Federelementes (14) haben/hat.

4. Steckkupplung nach einem oder mehreren der Ansprüche 1 bis 3,
**dadurch gekennzeichnet,** daß das Profilelement (16) am Steckerteil (4), insbesondere in einer Außenringnut (24) des Steckerschaftes (6), gelagert ist.

5. Steckkupplung nach einem oder mehreren der Ansprüche 1 bis 3,
**dadurch gekennzeichnet,** daß das Profilelement (16) im Gehäuseteil (2), insbesondere in einer Innenringnut der Aufnahmeöffnung, gelagert ist.

## Claims

1. Plug-in coupling for pressure-medium systems, comprising two coupling parts, specifically a housing part (2) and a plug part (4), it being possible for the plug part (4) to be plugged into a receiving opening (10) in the housing part (2) using a plug shank (6) so as to be sealed in a pressure-type manner by at least one main seal (8), and to be locked by a locking device against becoming detached, a dirt seal (12) being provided against the penetration of dirt or the like into the region of the main seal (8) and/or the locking device, and a spring element (14) being provided for producing a prestressing force (F) acting in the detachment direction of the plug part (4), the main seal, the dirt seal (12) and the spring element (14) being integrated to form a single-piece resilient profiled element (16), characterized in that the locking device is designed in such a way that a partly plugged-in pre-latched position and a wholly plugged-in, fully latched position are ensured, there being, in the pre-latched position, incomplete sealing such that, in the event of pressure being applied by a pressure medium, the latter escapes in a metered fashion past the main seal (8) and the dirt seal (12) and an acoustically perceptible leakage noise is produced in the process, and, in the fully latched position, complete pressure-tight sealing being ensured by the main seal (8), sealing against the penetration of dirt and the like already being provided in the pre-latched position by the dirt seal (12) and, in the event of pressure being applied, the dirt seal (12) being opened in the manner of a non-return valve by the pressure medium.

2. Plug-in coupling according to Claim 1, characterized in that the profiled element (16) comprises a first annular section (18) forming the main seal (8), a second, preferably lamellar, annular section (10) forming the dirt seal (12) and a connecting section (22) - especially a likewise annular section with a reduced cross section.

3. Plug-in coupling according to Claim 1 or 2, characterized in that when the plug part (4) is in the plugged-in and locked position, the profiled element (16) is arranged with elastic prestress between the housing part (2) and the plug part (4) such that the dirt seal (12) and/or the main seal (8), if necessary in conjunction with the connecting section (22), have/has the function of the spring element (14).

4. Plug-in coupling according to one or more of Claims 1 to 3, characterized in that the profiled element (16) is mounted on the plug part (4), especially in an external annular groove (24) in the plug shank (6).

5. Plug-in coupling according to one or more of Claims 1 to 3, characterized in that the profiled element (16) is mounted in the housing part (2), especially in an internal annular groove in the receiving opening.

## Revendications

1. Raccord rapide pour système de fluide sous pression, composé de deux parties de raccord, à savoir, d'une partie boîtier (2) et d'une partie mâle (4), dans lequel la partie mâle (4) peut être emmanchée par une fiche (6) de partie mâle dans une ouverture réceptrice (10) de la partie boîtier (2), et enfermée à joint étanche à la pression par au moins une garniture d'étanchéité principale (8) et peut être retenue à l'encontre de la séparation par un dispositif de verrouillage, et dans lequel sont prévus une garniture d'étanchéité de garde (12) pour protéger contre la pénétration de salissures et analogues dans la région de la garniture d'étanchéité principale (8) et/ou du dispositif de verrouillage, ainsi qu'un élément élastique (14) destiné à produire une force de précontrainte (F) qui agit dans le sens de la séparation de la partie mâle (4), la garniture d'étanchéité principale (8), la garniture d'étanchéité de garde (12) et l'élément élastique (14) étant intégrés dans un élément profilé élastique (16) en une seule pièce, caractérisé en ce que le dispositif de verrouillage présente une configuration qui garantit une position de pré-enclenchement partiellement emmanchée et une position d'enclenchement complet entièrement emmanchée, une étanchéité suffisamment incomplète étant présente dans la position de pré-enclenchement pour que, dans le cas d'une sollicitation de pression avec un fluide de pression, ce dernier s'échappe à un débit dosé en franchissant la garniture d'étanchéité principale (8) et la garniture d'étanchéité de garde (12), et qu'un bruit de fuite perceptible acoustiquement soit alors produit, tandis que, dans la position d'enclenchement complet, la garniture d'étanchéité principale (8) garantit l'étanchéité entièrement étanche à la pression, la garniture d'étanchéité de garde (12) garantissant déjà dans la position de pré-enclenchement une étanchéité s'opposant à la pénétration de salissures ou analogues, et la garniture d'étanchéité de garde (12) s'ouvrant à la façon d'un clapet anti-retour sous l'action du fluide de pression en cas de charge de pression.

2. Raccord à emmanchement selon la revendication 1, caractérisé en ce que l'élément profilé (16) est composé d'un premier segment annulaire (18) qui forme la garniture d'étanchéité principale (8), d'un deuxième segment annulaire (10), de préférence en forme de lamelle, qui forme la garniture d'étanchéité de garde (12), et d'un segment de liaison (22) - en particulier également annulaire, à section réduite.

3. Raccord à emmanchement selon la revendication 1 ou 2, caractérisé en ce que, dans la position emmanchée et verrouillée de la partie mâle (4), l'élément profilé (16) est disposé entre la partie boîtier (2) et la partie mâle (4) sous une précontrainte élastique de telle manière que la garniture d'étanchéité de garde (12) et/ou la garniture d'étanchéité principale (8) assure la fonction de l'élément élastique (14), éventuellement en combinaison avec le segment de liaison (22).

4. Raccord à emmanchement selon une ou plusieurs des revendications 1 à 3, caractérisé en ce que l'élément profilé (16) est monté sur la partie mâle (4), en particulier dans une gorge annulaire extérieure (24) de la fiche (6) de la partie mâle.

5. Raccord à emmanchement selon une ou plusieurs des revendications 1 à 3, caractérisé en ce que l'élément profilé (16) est monté dans la partie boîtier (2), en particulier dans une gorge annulaire intérieure de l'ouverture réceptrice.
